# EUROPÄISCHE PATENTANMELDUNG

(11) **EP 0 844 168 A2**
(43) Veröffentlichungstag der Anmeldung: **27.05.1998**
(21) Anmeldenummer: 97118123.5
(22) Anmeldetag: 18.10.1997
(51) Int. Cl.: B62D 43/00

(54) **Abdeckplatte mit integriertem Abstandhalter**

(30) Priorität: 06.11.1996 DE 29619244 U
(71) Anmelder: Marx Handelsgesellschaft mbH, 44379 Dortmund (DE)
(72) Erfinder: Marx, Reinhard, 44229 Dortmund (DE)
(74) Vertreter: Honke, Manfred, Dr.-Ing.

(57) **Zusammenfassung**

Es handelt sich um eine Radabdeckung, insbesondere Reserveradabdeckung, mit einem das Rad (1) umfangsseitig umgebenden Abdeckring (3) und einer das Rad (1) stirnseitig abdeckenden und von dem Abdeckring (3) randseitig übergriffenen Abdeckplatte (4). Die Abdeckplatte (4) weist auf ihrer Innenseite über ihren Umfang verteilte Abstandhalter (5) auf, die gegen den Reifen (2) des Rades (1) anliegen.

## Beschreibung

Die Erfindung betrifft eine Radabdeckung, insbesondere Reserveradabdeckung, mit einem das Rad umfangsseitig umgebenden Abdeckring und einer das Rad stirnseitig abdeckenden und von dem Abdeckring randseitig übergriffenen Abdeckplatte.

Es sind derartige Radabdeckungen und insbesondere Reserveradabdeckungen bekannt, bei denen die Abdeckplatte mittels eines Befestigungsbandes frontseitig bzw. stirnseitig auf dem Reserverad befestigt wird (vgl. DE-GM 91 09 453). Anschließend wird ein das Reserverad bzw. dessen Reifen umfangsseitig umgebender Abdeckring aus Stahlblech bzw. Edelstahl montiert und mittels eines Verschlusses verspannt. Dieser Andeckring übergreift randseitig die Abdeckplatte. Häufig sind die Abmessungen von Reserverad einerseits und Abdeckplatte bzw. Abdeckring andererseits nicht so aufeinander abgestimmt, daß der Abdeckring die Abdeckplatte randseitig spaltfrei übergreift und folglich Abdeckplatte und Abdeckring gleichsam eine Einheit bilden. Vielmehr muß dann ein Luftspalt zwischen der Abdeckplatte und dem Abdeckring in Kauf genommen werden. Das stört nicht nur in optischer und folglich ästhetischer Hinsicht, sondern auch in befestigungstechnischer Hinsicht, weil Klappereffekte zwischen der Abdeckplatte und dem Abdeckring auftreten können. Auch sind geringfügige Verschiebungen zwischen der Abdeckplatte und dem Abdeckring nicht ausgeschlossen, so daß die zentrische Positionierung zwischen der Abdeckplatte und dem Abdeckring verloren geht. Ein anderes Problem besteht darin, daß für die Montage des Abdeckrings häufig nur ein geringfügiger Abstand zwischen dem Reserverad und den Fahrzeugaufbauten, z. B. der Karosserie zur Verfügung steht. Das hängt von dem jeweiligen Fahrzeugtyp ab, bei dem es sich im allgemeinen um ein Off Road Car handelt. In solchen Fällen muß der Abdeckring gleichsam in Richtung auf die Abdeckplatte vorgezogen werden. Auch dadurch können Luftspalte zwischen der Abdeckplatte und dem sie radseitig übergreifenden Abdeckring entstehen, die ebenfalls aus den oben erläuterten Gründen stören. - Hier will die Erfindung Abhilfe schaffen.

Der Erfindung liegt die Aufgabe zugrunde, eine Radabdeckung und insbesondere Reserveradabdeckung der eingangs beschriebenen Ausführungsform zu schaffen, die sich durch eine umfangsseitig spaltfreie Einheit zwischen Abdeckplatte und Abdeckring auszeichnet und eine stramme Montage von Abdeckplatte und Abdeckring auf dem jeweiligen Reserverad gewährleistet, auch wenn zwischen dem Reserverad und den Fahrzeugaufbauten nur geringer Montageraum zur Verfügung steht.

Diese Aufgabe löst die Erfindung bei einer gattungsgemäßen Radabdeckung und insbesondere Reserveradabdeckung dadurch, daß die Abdeckplatte auf ihrer Innenseite über ihren Umfang verteilte Abstandhalter aufweist, die gegen den Reifen des Rades anliegen. - Diese Maßnahmen der Erfindung haben zur Folge, daß die Abdeckplatte im Zuge ihrer Befestigung auf dem Reserverad um ein vorgegebenes Maß von dem Reserverad distanziert wird. Dabei ist von Bedeutung, daß die am Plattenumfang angeordneten Abstandhalter gegen den hinreichend elastischen Reifen bzw. Reifenmantel anliegen. Aufgrund der Reifenelastizität läßt sich die Abdeckplatte von dem montierten Abdeckring stets derart radseitig umfassen, daß eine spaltfreie Einheit gebildet wird.

Tatsächlich wird die Abdeckplatte aufgrund der Reifenelastizität radseitig gegen den sie übergreifenden Abdeckring gedrückt, so daß ein strammer Sitz zwischen der Abdeckplatte und dem Abdeckring gewährleistet ist und beide eine zumindest optische Einheit bilden. Hinzu kommt, daß der Abdeckring aufgrund der Reifenelastizität und der innenseitigen Abstandhalter an der Abdeckplatte von eben dieser Abdeckplatte stets in Richtung auf die Abdeckplatte vorgezogen wird, so daß selbst bei engstem Montageraum zwischen dem Reserverad und den Fahrzeugaufbauten ein einwandfreier und strammer Sitz des Abdeckringes auf dem Reserverad bzw. seinem Reifen gewährleistet ist. Im Rahmen der Erfindung besteht die Möglichkeit, unter Berücksichtigung verschiedener Fahrzeugtypen mit unterschiedlichen Reserverädern und deren Montage Abdeckplatten einzusetzen, bei denen die Abstandhalter zweckmäßigerweise unterschiedliche Abstandsmaße definieren. Zwar sind die Abstandsmaße der Abstandhalter einer Abdeckplatte stets gleich groß, jedoch können unterschiedliche Abdeckplatten mit unterschiedlichen Abstandsmaßen eingesetzt werden.

Nach einem weiteren Vorschlag der Erfindung ist vorgesehen, daß die Abdeckplatte mindestens drei in 120°-Verteilung angeordnete Abstandhalter aufweist, weil eine derartige Anordnung eine statisch bestimmte Auflage der Abdeckplatte bzw. ihrer Abstandhalter gegen den Reifen des Reserverads gewährleistet. Dabei können die Abstandhalter - regelmäßig im Bereich des Plattenrandes - in die Abdeckplatte eingeformt oder an die Abdeckplatte angeformt sein. Das gilt für Abdeckplatten aus Kunststoff ebenso wie für Abdeckplatten aus Stahlblech bzw. Edelstahl. Selbstverständlich kann auch der Abdeckring aus entsprechenden Materialien gefertigt sein.

Ferner ist vorgesehen, daß die Abstandhalter eine der Außenwölbung des jeweiligen Reifens angepaßte Innenwölbung aufweisen. In diesem Zusammenhang besitzt die Innenwölbung des Abstandhalters im allgemeinen einen Innenradius, welcher im wesentlichen dem durch die Außenwölbung des Reifens bzw. seiner Laufbahnoberfläche vorgegebenen Außenradius entspricht. Das heißt, Innenradius und Außenradius sind regelmäßig aneinander angepaßt, um ein sattes Aufliegen bzw. einen strammen Sitz der Abdeckplatte auf dem Reifen zu gewährleisten. Um eine spaltfreie Einheit aus Abdeckring und Abdeckplatte zu erreichen und insgesamt ein ansprechendes Äußeres zu erzielen, weist der Abdeckring in der Regel eine die Abdeckplatte randseitig übergreifenden Haltering auf. Mittels der Abstandhalter kann der randseitige Abstand der Abdeckplatte bzw. des Abdeckringes von der Laufbahnoberfläche und/oder der stirnseitige Abstand der Abdeckplatte von einer Reifenflankenfläche eingestellt werden. Dabei definieren die Abstandhalter bei unterschiedlichen Abdeckplatten hauptsächlich unterschiedliche Abstandsmaße. Dies alles gelingt besonders elegant für den Fall, daß die Abstandhalter im Querschnitt jeweils umgekehrt - Z-förmig mit zwei Z-Schenkeln und die Z-Schenkel verbindendem Z-Steg ausgebildet sind. Dabei sind die beiden vorgenannten Z-Schenkel regelmäßig im wesentlichen parallel zueinander angeordnet.

Im folgenden wird die Erfindung anhand einer lediglich ein Ausführungsbeispiel darstellenden Zeichnung näher erläutert; es zeigen:
- **Fig. 1**: eine schematische stirnseitige Aufsicht auf eine Reserveradabdeckung,
- **Fig. 2**: einen Vertikalschnitt durch den Gegenstand nach Fig. 1 im Bereich von Abstandhaltern für die Abdeckplatte,
- **Fig. 3**: eine Draufsicht auf die Innenseite der Abdeckplatte für den Gegenstand nach Fig. 1 und
- **Fig. 4**: schematisch den Abdeckring für den Gegenstand nach Fig. 1 ohne Verschlußmechanismus.

In den Figuren ist eine Reserveradabdeckung dargestellt, die in ihrem grundsätzlichen Aufbau einen das Rad 1 bzw. dessen Reifen 2 umfangsseitig umgebenden Abdeckring 3 bzw. Spannung - gegebenenfalls mit (nicht gezeigtem) Spannschloß - und eine das Rad 1 bzw. dessen Reifen 2 stirnseitig abdeckende und von dem Abdeckring 3 randseitig übergriffene Abdeckplatte 4 aufweist. Die Abdeckplatte 4 besitzt auf ihrer Innenseite über ihren Umfang verteilte Abstandhalter 5, die sich im äußeren Umfangsbereich befinden und folglich nach erfolgter Befestigung der Abdeckplatte 4 auf dem Reserverad 1 gegen dessen elastischen Reifen 2 bzw. Reifenmantel anliegen. Die Abdeckplatte 4 weist mindestens drei in 120°-Verteilung angeordnete Abstandhalter 5 auf. Nach dem Ausführungsbeispiel sind sechs solcher Abstandhalter 5 vorgesehen. Diese Abstandhalter 5 sind im Bereich des Plattenrandes in die Abdeckplatte 4 eingeformt, können aber auch an die Abdeckplatte 4 angeformt sein. Unter Ausnutzung der Reifenelastizität sorgen die Abstandhalter 5 dafür, daß stets ein spaltfreier Sitz zwischen der Abdeckplatte 4 und dem sie randseitig übergreifenden Abdeckring 3 gewährleistet ist und darüber hinaus Abdeckplatte 4 und Abdeckring 3 eine Einheit bilden, die mit strammen Sitz auf dem Reserverad 1 gleichsam in Richtung Abdeckplatte 4 vorgezogen ist.

Um diesen Effekt zu unterstützen, besitzt der Abdeckring 3 einen die Abdeckplatte randseitig übergreifenden Haltering 7. Mit Hilfe der Abstandhalter 5 läßt sich der randseitige Abstand A der Abdeckplatte 4 bzw. des Abdeckringes 3 von der Laufbahnoberfläche 2a einstellen. Gleichzeitig oder alternativ kann auch der stirnseitige Abstand B der Abdeckplatte 4 von einer Reifenflankenfläche 2b mittels der Abstandhalter 5 vorgegeben werden. Die beiden vorgenannten Abstände A, B stellen gleichsam das durch die Abstandhalter 5 definierte Abstandsmaß dar. Dabei können die Abstandhalter 5 unterschiedliche Abstandsmaße vorgeben, und zwar unter Berücksichtigung verschiedener Fahrzeugtypen mit unterschiedlichen Reserverädern. Jedenfalls lassen sich unterschiedliche Abdeckplatten 4 und gegebenenfalls Abdeckringe 3 mit verschiedenen Abstandsmaßen bzw. Abständen A, B einsetzen.

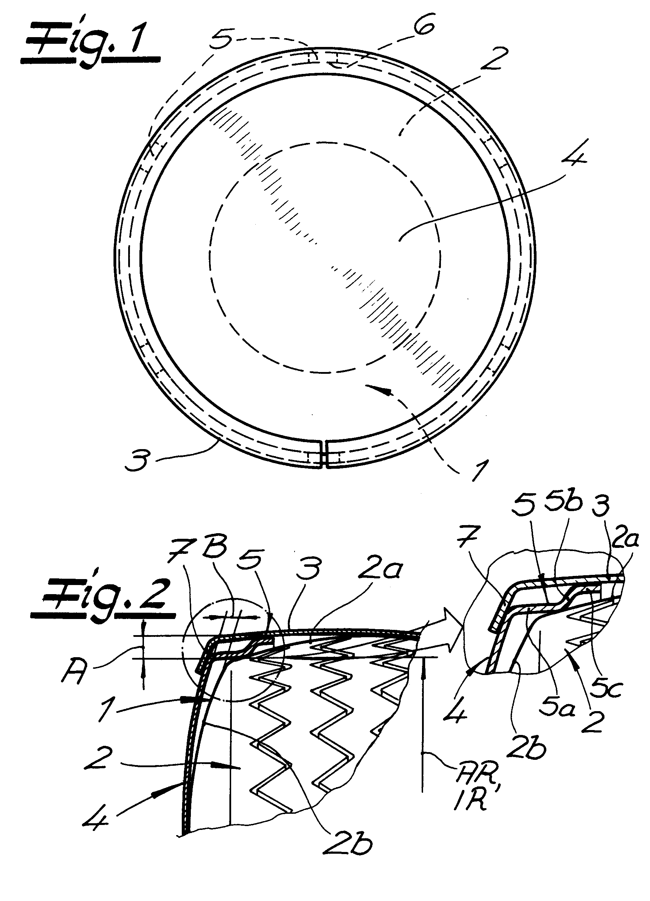

Um die vorgenannte Geometrie einstellen zu können, sind die Abstandhalter 5 ausweislich der Fig. 2 im Querschnitt umgekehrt - Z-förmig ausgebildet. Zu diesem Zweck weisen die Abstandhalter 5 zwei Z-Schenkel 5a, 5c und jeweils einen die Z-Schenkel 5a, 5c verbindenden Z-Steg 5b auf. Die beiden Z-Schenkel 5a, 5c sind im wesentlichen parallel zueinander angeordnet. Auf diese Weise läßt sich der randseitige Abstand A der Abdeckplatte 4 bzw. des Abdeckrings 3 gleichsam automatisch einstellen. Denn dadurch, daß der Abdeckring 3 auf dem oberen Z-Schenkel 5c aufliegt, wird sein Abstand A von der Laufbahnoberfläche 2a eingestellt. Hinzu kommt, daß der Abdeckring 3 mit dem die Abdeckplatte 4 randseitig übergreifenden Haltering 7 gleichfalls auf der Abdeckplatte 4 aufliegt und so der stirnseitige Abstand B der Abdeckplatte 4 von der Reifenflankenfläche 2b für eine entsprechende Beabstandung dieses Halteringes 7 von der Reifenflankenfläche 2b sorgt. Selbstverständlich handelt es sich bei den vorgenannten Abständen A, B um Variable - je nach Wölbung der Laufbahnoberfläche 2a bzw. der Reifenflankenfläche 2b. Insgesamt ist durch diese Maßnahmen gewährleistet, daß Abdeckplatte 4 und Abdeckring 3 eine Einheit bilden, welche mit strammen Sitz auf dem Reserverad 1 gleichsam in Richtung auf die Abdeckplatte 4 vorgezogen ist. Spalte oder dergleichen Öffnungen treten nicht auf. Insofern wird eine spaltfreie Einheit gebildet.

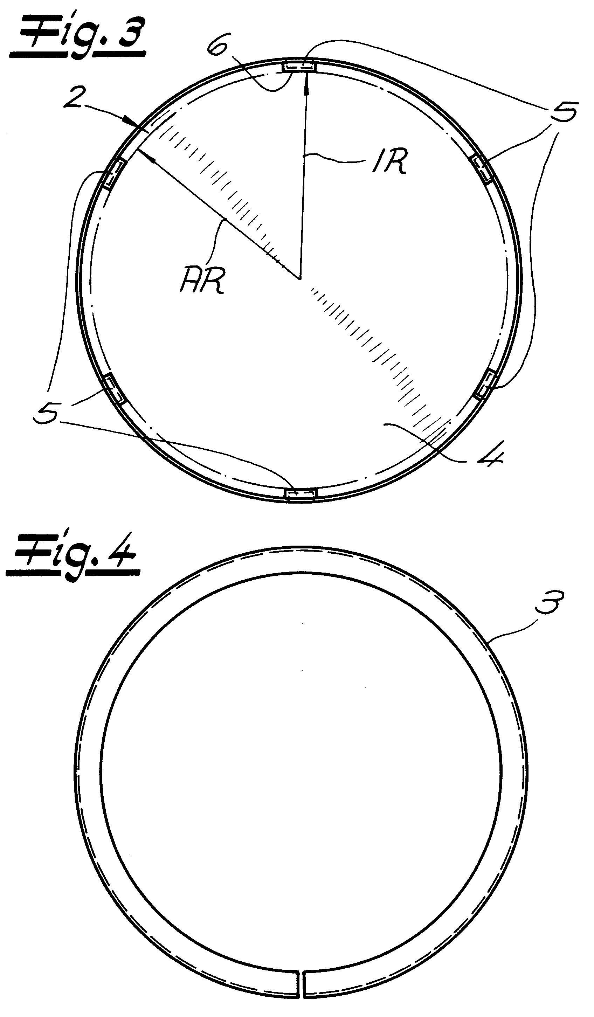

Schließlich weisen die Abstandhalter 5 eine der Außenwölbung des jeweiligen Reifens 2 angepaßte Innenwölbung 6 auf. Dabei besitzt die Innenwölbung 6 des Abstandhalters 5 ausweislich der Fig. 3 einen Innenradius IR, welcher im wesentlichen dem durch die Außenwölbung des Reifens 2 bzw. seiner Laufbahnoberfläche 2a vorgegebenen Außenradius AR entspricht. Selbstverständlich variiert AR über die Laufbahnoberfläche 2a entsprechend der Außenwölbung des Reifens 2. Vorliegend kommt es insbesondere auf den Außenradius AR im Bereich der Reifenflanke 2b an, weil hier der jeweilige Abstandhalter 5 aufliegt (Fig. 2). Das heißt, im allgemeinen gilt die mathematische Beziehung IR ≈ AR. Selbstverständlich sind auch Relationen wie IR > AR denkbar. Seltener dürfte der Fall auftreten, wonach IR < AR ist.

Die Radabdeckung bzw. Reserveradabdeckung kann aus Stahl und/oder Kunststoff bestehen.

## Patentansprüche

1. Radabdeckung, insbesondere Reserveradabdeckung, mit einem das Rad (1) umfangsseitig umgebenden Abdeckring (3) und einer das Rad (1) stirnseitig abdeckenden und von dem Abdeckring (3) randseitig übergriffenen Abdeckplatte (4), **dadurch gekennzeichnet**, daß die Abdeckplatte (4) auf ihrer Innenseite über ihren Umfang verteilte Abstandhalter (5) aufweist, die gegen den Reifen (2) des Rades (1) anliegen.

2. Radabdeckung nach Anspruch 1, dadurch gekennzeichnet, daß die Abdeckplatte (4) mindestens drei in 120°-Verteilung angeordnete Abstandhalter (5) aufweist.

3. Radabdeckung nach Anspruch 1 oder 2, dadurch gekennzeichnet, daß die Abstandhalter (5) im Bereich des Plattenrandes in die Abdeckplatte (4) eingeformt oder an die Abdeckplatte (4) angeformt sind.

4. Radabdeckung nach einem der Ansprüche 1 bis 3, dadurch gekennzeichnet, daß die Abstandhalter (5) eine der Außenwölbung des jeweiligen Reifens (2) angepaßte Innenwölbung (6) aufweisen.

5. Radabdeckung nach einem der Ansprüche 1 bis 4, dadurch gekennzeichnet, daß die Innenwölbung (6) des Abstandhalters (5) einen Innenradius (IR) aufweist, welcher im wesentlichen dem durch die Außenwölbung des Reifens (2) bzw. seiner Laufbahnoberfläche (2a) vorgegebenen Außenradius (AR) entspricht.

6. Radabdeckung nach einem der Ansprüche 1 bis 5, dadurch gekennzeichnet, daß die Abstandhalter (5) bei unterschiedlichen Abdeckplatten (4) unterschiedliche Abstandsmaße (Abstand A, Abstand B) definieren.

7. Radabdeckung nach einem der Ansprüche 1 bis 6, dadurch gekennzeichnet, daß der Abdeckring (3) einen die Abdeckplatte (4) randseitig übergreifenden Haltering (7) aufweist.

8. Radabdeckung nach einem der Ansprüche 1 bis 7, dadurch gekennzeichnet, daß mittels der Abstandhalter (5) der randseitige Abstand (A) der Abdeckplatte (4) bzw. des Abdeckringes (3) von der Laufbahnoberfläche (2a) und/oder der stirnseitige Abstand (B) der Abdeckplatte (4) von einer Reifenflankenfläche (2b) einstellbar ist.

9. Radabdeckung nach einem der Ansprüche 1 bis 8, dadurch gekennzeichnet, daß die Abstandhalter (5) im Querschnitt jeweils umgekehrt - Z-förmig mit zwei Z-Schenkeln (5a, 5c) und die Z-Schenkel verbindendem Z-Steg (5b) ausgebildet sind.

10. Radabdeckung nach Anspruch 9, dadurch gekennzeichnet, daß die beiden Z-Schenkel (5a, 5c) im wesentlichen parallel zueinander angeordnet sind.
